# EUROPEAN PATENT SPECIFICATION

(11) **EP 1 491 812 B1**
(45) Date of publication and mention of the grant of the patent: **17.08.2005**
(21) Application number: 03709830.8
(22) Date of filing: 10.03.2003
(51) Int. Cl.: F16L 33/025

(54) **IMPROVEMENTS TO BRIDGES FOR FLAT BAND CLAMPS**
VERBESSERUNGEN FÜR BRÜCKEN FÜR FLACHBANDSCHELLEN
AMELIORATIONS APPORTEES AUX PONTS DE COLLIERS DE SERRAGE A BANDE PLATE

(30) Priority: 19.03.2002 ES 200200756
(43) Date of publication of application: 29.12.2004
(73) Proprietor: MIKALOR, S.A., 08205 Sabadell (Barcelona) (ES)
(72) Inventor: PALAU DOMINGUEZ, Ramon, E-08205 Sabadell (ES)
(74) Representative: Canela Giménez, Teresa
(86) International application number: PCT/ES2003/000106
(87) International publication number: WO 2003/081111

(56) References cited:
- EP-A- 1 193 437
- ES-T- 2 069 807
- JP-A- 63 172 085

## Description

### FIELD OF THE INVENTION

The present invention relates to the flat-strip clamp bridges used for clamping hose tubes and the like, these improvements being a bend of precise geometry in the sides of the central region of the bridge, thus producing a deformation which gives the bridge greater inertia and the clamp greater mechanical reliability in use.

### PRIOR ART

Flat-strip clamps used to clamp sleeves, rubber tubes, hoses or the like are known. There are a large number of constructions and designs which cover this field and which are intended for different purposes in each case. The applicant has been developing various types of clamp since 1965.

Spanish Utility Model ES-0116670 of 1965 is a tension clamp. Spanish Patent ES-0317355P, likewise from 1965, uses a screw to constrict the clamp. In Spanish Utility Model ES-0140132U of 1968, a flat-strip metal clamp was used which incorporated elements for fastening the free ends of the metal band and a deformation bridge for constricting the clamp once mounted on the tube and thus achieving greater sealing, the said bridge being of a large size.

The type of clamp to which the present invention relates is of the type described in the last paragraph: clamps formed by a flat metal strip which is open at its ends. The ends are joined by fastening to form a ring which is secured to the tube that it is desired to clamp.

Patent US-3321811 of K. Thomas describes a clamp of this type which incorporates a deformation bridge of a size similar to that of the bridges used in current clamps.

It was later established that these bridges in this type of clamp could, by the introduction of reinforcing elements, give better efficiency in terms of greater inertia and greater mechanical force necessary to deform them.

Patent US-3789463 of Oetiker indicates a bridge in this type of clamp which incorporates reinforcement deformations, the aim of which is to increase the deformation resistance of the bridge and therefore to increase the clamping achieved by this type of bridge.

The prior art technique of using depressions or grooves in the region of the bridge in order to reinforce it has the disadvantage that the deformation of the bridge, when its lateral limbs are constricted using a suitable tool, forces the depression downwards, which may give rise to pinching of the hose which is constricted.

In order to overcome this disadvantage and nevertheless to obtain better performance as regards compression of the bridge region, another type of reinforcement of the bridge region has been tried, this time involving the lateral profile of the upper portion of the bridge.

European Patent EP-0491291 of Oetiker discloses lateral appendages created from recesses in the upper region of the bridge. The appendages lie at an angle of approximately 45°, in the manner of lateral ramps, reaching a size in height equivalent to that of the limbs of the clamp bridge. The upper portion of the bridge therefore undergoes a reduction in width as a consequence of the recesses made in order to form the lateral appendages.

The solution proposed by Mr. Oetiker, even though it provides greater force for compressing the bridge and the clamp, has the disadvantage of both the loss of material in the region closest to the bridge limbs and, as a consequence of its design, a brusque change of the bridge momentum of inertia from its middle portion while it is drawing near to the bridge limbs. The above construction involves manufacturing problems since cuts of material are to be made and besides there exists danger of breakage of the limbs while the clamp is being compressed.

With the object of fulfilling the new requirements of quality in the field of motor vehicles, Mikalor has developed a new design of the head of the flat-strip clamp which makes it possible to ensure, in conjunction with the new tool for closing the head with unitary control of the closing force, likewise developed by Mikalor, that the clamping action of the clamps is completely reliable, that is to say, provides the necessary clamping to ensure sealing in use.

The Mikalor deformation to which the present invention relates achieves better performance because it uses the same width of strip over the entire extent of the bridge, producing a deformation which creates two lateral walls perpendicular to the upper plane of the bridge or cross-member, the junction thereof with the non-deformed region of the bridge being regular and continuous, owing to a twisted surface. Its momentum of inertia, very high at the middle region of the bridge, decreases in a continuous and regular way, that is, without brusque discontinuities, which ensures a better performance of the overall bridge and an improved sturdiness of the limbs thereof when compressions is taking place.

In addition to the above, the descending and perpendicular lateral walls guide the lateral limbs during the process of deformation of the bridge, resulting in a form of bend thereof which is predetermined and symmetrical, obtaining maximum performance in the clamping action of the clamp.

In addition, the relative size and the shape of the deformed and non-deformed portions of the sides of the bridge region are calculated in the present invention to ensure that the clamping action of the clamps is completely reliable.

Patent US-54756060 of NHK Spring Co. describes a bridge clamp, of the same type as the above, with deformation of the sides of the said bridge.

In short, the bridge has a relatively shallow depression and thanks both to the ribs (lateral deformation) and the depression thereof, it provides a stronger junction of the hose because greater forces can be applied on the bridge and the clamp thereby being the deformation of the bridge avoided. The clamp has fewer interferences with the surrounding area because the bridge suffers less deformation than conventional clamp bridges, without deformation of the bridge sides.

The head is less deformable owing the high momentum of inertia of the transverse section, which is at its highest at the central region of the bridge and progressively decreases toward the sides thereof.

Again, in a way similar to' the Oetiker patent under analysis, the high clamping forces obtained with this type of clamp thanks to both the depressions of the central region of the bridge and the deformation of the side thereof, together with the weakening of bridge limbs make the said bridges vulnerable and subject to the danger of breakage of their limbs or undesirable deformations of same.

In contrast, the bridge of the present invention, emerges from a different constructive principle and discards the use of depressions located at the central region of the bridge and cuts or variations in the width of the strip. Besides, it achieves better results as to the clamping forces than the prior clamps and a greater control of the deformation of the clamp while it is being compressed thanks to the particular configuration of a deformation of the bridge sides that provides it with a high momentum of inertia at the middle region thereof with a gradual and progressive decrease of the said inertia with the proximity to the bridge limbs, further reinforcing the structure of the said limbs by means of twisted junction walls of considerable size between the deformed and the non-deformed bridge regions.

Patent JP-63172085 of NHK Spring Co. discloses ribs at both edges of the upper region of the bridge, which ribs are folded towards the inside. These ribs, the central portion of which projects towards the inside more than the two end portions, extend over a small portion, in the transverse direction, of the upper region of the bridge, and almost the entire longitudinal extent of the bridge, having a curved external profile. A depression or depressions in the central portion of the cross-member of the bridge, which are distributed regularly and are centered and have a depth close in size to the drop of the edges, complete the reinforced bridge.

Patent WO-0070260 of NHK Spring Co. represents a solution very similar to its Japanese patent JP-63172085, likewise describing ribs at both edges of the upper region of the bridge, bending them towards the inside, and with depressions or drawn portions in the central portion of the cross-member of the bridge. The ribs extend over more than 60% of the length of the bridge, lie at an angle of approximately 45° and are fairly shallow. These deformations are centered on the side of the bridge, leaving a small portion thereof unaffected in order not to increase the rigidity of the limbs of the bridge and to prevent the limbs from breaking when the deformation thereof is required.

It has been established that the perpendicular walls created with the deformation of the sides of the bridge, to which the present invention relates, offer better results compared with ribs which create flaps in the shape of lenses or ogives represented in patents JP-63172085 and WO-0070260.

In this last patent the bridge also represents a structural whole in which there is a close dimensional relationship between all its elements, with the existence of depressions located at the central region of the bridge, which relationship is not comparable in the present invention which uses a completely different principle in the construction of the deformation of the sides of the bridge, other proportions and, in short, other elements forming the bridge.

Thus, while the NHK patents describe deformations in the form of flaps or small lateral bends, similar to a lens and having a length greater than 60% of the length of the bridge, Mikalor constructs lateral walls that have a completely straight external profile and that are perpendicular in a central region of the sides of the strip, producing in the bridge three distinct regions which are symmetrical with respect to a longitudinal axis and a transverse axis, the bridge assuming, in plan view, the general shape of an hourglass, the length of the straight walls being approximately 50% of the total length of the bridge.

The ribbing forming the flaps in NHK is curved in order to obtain maximum resistance in the centre of the bridge and minimum resistance in the regions where the bridge is in contact with the limbs thereof, while, in Mikalor, there is a straight bend line providing a region which is uniform over its entire extent.

Among the objects pursued by the present invention is obtaining a bridge with greater inertia and a clamp with greater mechanical reliability in use. And in fact, a clamp having a very reliable, uniform and high clamping results has been obtained.

Although the prior art has provided good results, when greater reliability is pursued in the application of flat-strip clamps the known clamps are not entirely satisfactory.

The improvements introduced into the clamp bridges according to the present invention provide a constricting bridge by means of which very reliable, uniform and enhanced results are obtained in the clamping by mechanical deformation of the bridge of the clamps.

### SUMMARY OF THE INVENTION

The present invention relates to flat-strip clamp bridges, which are formed through a selective folding of the central portion of the sides of the upper portion or cross-member of the bridge, forming walls perpendicular to the cross-member and leaving intact a front and rear region of the cross-member of the bridge, in the longitudinal direction of the strip, the fold being at an angle of approximately 90°, without any intersection or discontinuity with the non-deformed portion of the bridge, and the height of the fold being from 2.2 mm to 2.5 mm.

In plan view, the bridge of the invention has an elongate appearance and the general shape of an hourglass. The cross-member of the bridge is completely flat and without drawn portions.

The junction of each perpendicular wall, obtained by the deformation of the respective side of the bridge, with the region thereof which remains intact is continuous, owing to a twisted portion between right-angled walls.

The mechanical features of the bridge of the invention have been found to be useful in that, when the bridge is compressed, they enable the cross-member to be bent on itself, by flexing the non-deformed regions of the bridge, while the central region flanked by the deformations of the invention remains intact.

The centre of gravity of the bridge of the invention has been calculated to be located at a middle point of the bridge and to be low in height. All of this leads to a very high degree of inertia and optimum efficiency of the type of clamp that incorporates the bridge of the invention.

Therefore, the principal object of the present invention is to provide a flat clamp with a girding bridge which ensures reliability in the clamping thereof.

Another object of the present invention is to provide a flat-strip clamp which is functional and reliable, providing inertias in the central and middle region of the bridge of not less than 1.7 mm⁴.

A further object of the present invention is the economy in the manufacture of the bridge thanks to the fact that for its construction it is not necessary to change the width of the band or to perform cuts on its surface.

Still, a further object of the present invention is to provide a flat-strip clamp having a clamping bridge, which clamp can be used with some degree of tolerance and resilience against excessive clamping. This tolerance and resilience is provided by the same bridge which, despite being irreversibly contracted, maintains a degree of flexibility which enables it to relax the excessive constriction of the hose.

Finally, still a further object of the present invention is to achieve a reliable control of the forming in the manufacturing process of the said bridge and also to allow the control of the bridge shape during the closing process and the compressing of the clamp.

### BRIEF EXPLANATION OF THE DRAWINGS

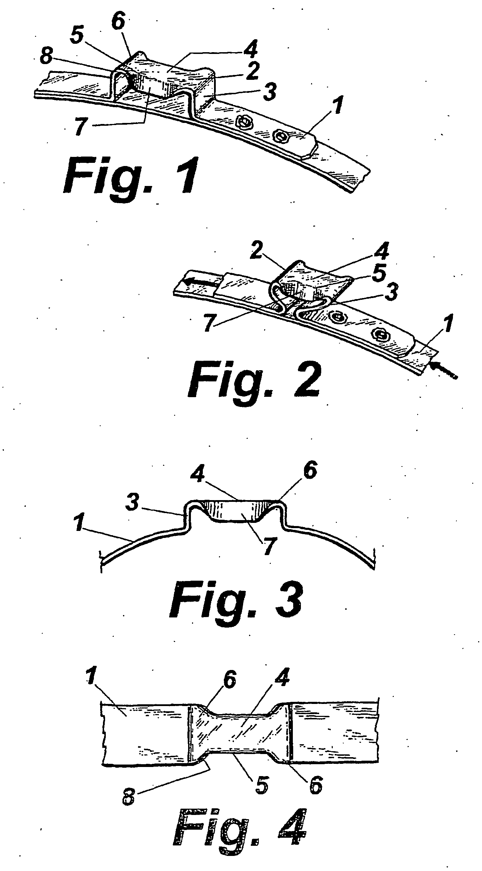

For better interpretation of the subject-matter of the invention, a description will be given hereinafter of a practical embodiment, by way of an example thereof, accompanied by a set of drawings in which Figure 1 is a perspective representation of a clamp which incorporates the improvements of the invention, once assembled and at a moment prior to the constriction of the bridge.

Figure 2 is a further perspective view, like that of Figure 1, shown after the constriction of the clamp bridge.

Figure 3 is a front view of the clamp bridge of the invention.

Figure 4 is a plan view of the clamp bridge according to the invention.

### DETAILED EXPLANATION OF A PREFERRED EMBODIMENT

The present invention consists in flat-strip clamp bridges, in which straight fold lines (5) are formed in the central portion of each of the sides of the upper portion (4) of the bridge (2) of the clamp (1), which folds (5) form vertically descending lateral walls (7).

The folds (5) are formed parallel with one another and they separate non-deformed regions (6) of the upper portion (4) of the bridge (2). The separated regions (6) are symmetrical with respect to the longitudinal and transverse axes of the strip (1) which start from the centre of the bridge (2).

No cut or break in the material of the strip (1) or of the bridge (2) is made during the formation of the folds (5) and the descending walls (7). Nor is there any variation in the width of the strip (1) over the entire extent of the clamp, including its bridge region (2).

All of the aforementioned structural elements give the advantage of great economy in the manufacture of the bridge according to the invention since there is no requirement for a variation in the width of the strip, or for cuts in the surface thereof, in order to construct the bridge, and reliable control of the shaping thereof during the process of manufacturing the bridge is also permitted.

The external profile of the descending walls (7) is straight, as are the fold lines (5) forming the walls (7).

In addition, the junction or separation existing between the non-deformed portions (6) of the bridge (4) and the descending lateral walls (7) is regular and continuous owing to a twisted surface (8).

In plan view, the bridge according to the improvements of the invention has the general shape of an elongate hourglass in which the length of the descending walls (7) represents from 46% to 58% of the total length of the bridge (2).

The lateral walls (7) have a vertical drop and, in conjunction with the bridge (2), are similar to the lateral partitions of a right-angled structure in which there are volumetric regions in front of and behind the partitions, which correspond to one another at the regions (6) without deformation and which are wider, being cantilevered, that is to say, being without the support of the lateral partitions which correspond to one another at the descending walls (7).

Like the known bridge, the bridge (2) of the invention has two limbs (3) which project towards the outside of the clamp and which are joined by a flat junction surface or cross-member (4).

The operation of deformation and consequent constriction of the clamp (1) is effected by pinching inwardly and simultaneously the lateral limbs (3) of the bridge (2). This pinching reduces the diameter of the clamp (1), which results in greater clamping on the hose to which it is fitted.

When the bridge (2) according to the invention is constricted, its lateral limbs (3) are moved towards one another by the action of the tool used for the purpose. The non-deformed regions (6) of the bridge (2) follow this displacement of the limbs (3), being bent on themselves, until they reach the limit or the resistance which the descending lateral walls (7) represent. The deformation produced, which is characteristic of this bridge (2), causes the bridge to contract without bringing about any collapse in its central region (4) except for an extremely slight lifting of the upper portion (4) of the bridge (2), while its central region remains intact. This result is clearly satisfactory with respect to the prior art.

Furthermore, the specific configuration of the improvements introduced in the present invention makes it possible to control the shape of the bridge during the process of closing the clamp, very uniform and enhanced results being obtained in the clamping operation, thus ensuring the sealed mounting of the clamp and its reliability.

By having a straight central region (4), with descending and perpendicular lateral walls (7), during the process of deformation of the bridge (2) the lateral limbs (3) thereof are guided, the deformed bridge adopting a predetermined and symmetrical shape in which its limbs (3) assume the shape of an "S", which leads to maximum efficiency in the clamping action of the clamp.

In addition, the arrangement of the descending lateral walls (7), acting as pillars with respect to the deformation of the bridge, results in an optimisation of the force necessary to compress the bridge (2), compared with other earlier arrangements which construct the lateral deformations of the bridge in the form of flanges or flaps.

The effects described in the two previous paragraphs are reinforced by the existence of the twisted junction surfaces (8) between the non-deformed portions (6) of the bridge (2) and the descending lateral walls (7). In fact, the twisted walls (8) act in the two manners described, in a combination of both types of action, reinforcing the resistance to bending of the bridge and increasing the material capable of being deformed.

Mechanical studies carried out with clamps which develop the bridge according to the present invention have established in a non-limiting preferred construction that the non-deformed portions (6) of the bridge (2) must each have a length of not less than 10% of the total length of the upper portion (4) of the bridge (2). Each twisted junction region (8) must have a length of not less than 11% of the total length of the upper portion (4) of the bridge (2).

Likewise, the height of the descending lateral walls (7) must be from 2.2 mm to 2.5 mm.

In fact, with the described configuration, the centre of gravity of the bridge is located below the middle region of the upper portion (4) of the bridge (2), inertias of not less than 1.7 mm⁴ thus being achieved.

## Claims

1. FLAT-STRIP CLAMP BRIDGE, applied to clamps which are of the flat-strip type, with a constricting bridge, and which have deformations of the bridge in order to optimise constriction, the deformations being ones that affect the sides of the upper portion of the bridge of the clamp, comprising straight folds (5) in the central portion of each of the sides of the upper portion (4) of the bridge (2) of the clamp (1), the folds (5) being parallel with one another and forming lateral walls (7) that descend vertically and that have a straight external profile, which folds (5) divide the bridge (2) into non-deformed regions (6) that are separate and symmetrical with respect to the longitudinal and transverse axes of the strip (1), without cuts or discontinuities between the lateral walls (7) and the non-deformed portions (6) of the bridge (2) owing to the fact that they are joined by twisted surfaces (8).

2. FLAT-STRIP CLAMP BRIDGE, according to claim 1, **CHARACTERISED in that** the descending lateral walls (7) have an extent, in the longitudinal direction of the strip, of from 46% to 58% of the total length of the bridge.

3. FLAT-STRIP CLAMP BRIDGE, according to claims 1 and 2, **CHARACTERISED by** having an extent, in the longitudinal direction of the strip, of each of the non-deformed regions (6) of not less than 10% of the total length of the bridge (2).

4. FLAT-STRIP CLAMP BRIDGE, according to claims 1 to 3, **CHARACTERISED in that** none of the twisted surfaces (8) is shorter in length, in the longitudinal direction of the strip, than 11% of the total length of the bridge (2).

5. FLAT-STRIP CLAMP BRIDGE, according to claims 1 to 4, **CHARACTERISED in that** the height of the descending lateral walls (7) is from 2.2 mm to 2.5 mm.

6. FLAT-STRIP CLAMP BRIDGE, according to claims 1 to 5, **CHARACTERISED in that** the inertia measured in the middle region of the upper portion (4) of the bridge (2) is not less than 1.7 mm⁴.

## Patentansprüche

1. Brücke für Flachbandschellen, die für flachband-artige Schellen (1) mit einer Kontraktionsbrücke angewendet wird, und die Deformationen der Brücke vorsehen, um die Kontraktion zu optimieren, wobei die Deformationen derart sind, dass sie auf Seiten eines oberen Bereiches der Brücke (2) der Schelle (1) einwirken, umfassend gerade Falze (5) in dem zentralen Bereich jeder Seite des oberen Bereiches (4) der Brücke (2) der Schelle (1), wobei die Falze (5) zueinander parallel angeordnet sind und Seitenwände (7) bilden, die vertikal nach unten hin abfallen und die ein gerades externes Profil haben, wobei die Falze (5) die Brücke (2) in separate nicht-verformte Abschnitte (6) unterteilen, und wobei die nicht-verformten Abschnitte (6) in Bezug auf die Längs- und Querachse der Schelle (1) symmetrisch sind, ohne Einschnitte und ohne Diskontinuitäten zwischen den Seitenwänden (7) und den nicht-verformten Abschnitten (6) der Brücke (2), aufgrund der Tatsache, dass sie über gekrümmte Flächen (8) verbunden sind.

2. Brücke für Flachbandschellen nach Anspruch 1, **dadurch gekennzeichnet,dass**die abfallenden Seitenwände (7) sich in Längsrichtung der Schelle in einem Bereich zwischen 46% bis 58% in Bezug auf die Gesamtlänge der Brücke erstrecken.

3. Brücke für Flachbandschellen nach den Ansprüchen 1 und 2, **dadurch gekennzeichnet, dass** sie in Längsrichtung der Schelle eine Erstreckung aufweist, so dass jeder der nicht-verformten Abschnitte (6) nicht weniger als 10% in Bezug auf die Gesamtlänge der Brücke (2) einnimmt.

4. Brücke für Flachbandschellen nach den Ansprüchen 1 bis 3, **dadurch gekennzeichnet, dass** keine der gekrümmten Flächen (8) eine kürzere Länge in Bezug auf die Längsrichtung der Schelle aufweist, als 11% der Gesamtlänge der Brücke (2).

5. Brücke für Flachbandschellen nach den Ansprüchen 1 bis 4, **dadurch gekennzeichnet, dass** die Höhe der abfallenden Seitenwände (7) in einem Bereich zwischen 2,2 mm und 2,5 mm liegt.

6. Brücke für Flachbandschellen nach den Ansprüchen 1 bis 5, **dadurch gekennzeichnet, dass** eine Trägheit, die im Mittelbereich des oberen Bereiches (4) der Brücke (2) gemessen wird, nicht weniger als 1,7 mm⁴ beträgt.

## Revendications

1. Pont de fixation en bande droite, appliqué aux fixations qui sont du type en bande droite, avec un pont d'étranglement, et qui présentent des déformations du pont de façon à optimiser l'étranglement, les déformations étant celles qui affectent les côtés de la partie supérieure du pont de la fixation, comprenant des plis droits (5) dans la partie centrale de chacun des côtés de la partie supérieure (4) du pont (2) de la fixation (1), les plis (5) étant parallèles les uns aux autres et formant des parois latérales (7) qui descendent verticalement et qui ont un profil extérieur droit, lesdits plis (5) divisant le pont (2) en zones non déformées (6) qui sont séparées et symétriques par rapport aux axes longitudinal et transversal de la bande (1), sans coupes ou discontinuités entre les parois latérales (7) et les parties non déformées (6) du pont (2) grâce au fait qu'elles sont accouplées par des surfaces tordues (8).

2. Pont de fixation en bande droite, selon la revendication 1, **caractérisé en ce que** les parois latérales descendantes (7) ont une étendue, dans le sens longitudinal de la bande, allant de 46 % à 58 % de la longueur totale du pont.

3. Pont de fixation en bande droite, selon les revendications 1 et 2, **caractérisé en ce qu'**il comprend une étendue, dans le sens longitudinal de la bande, de chacune des zones non déformées (6) d'au moins 10 % de la longueur totale du pont (2).

4. Pont de fixation en bande droite, selon les revendications 1 à 3, **caractérisé en ce qu'**aucune des surfaces tordues (8) n'est plus courte en longueur, dans le sens longitudinal de la bande, que 11 % de la longueur totale du pont (2).

5. Pont de fixation en bande droite, selon les revendications 1 à 4, **caractérisé en ce que** la hauteur des parois latérales descendantes (7) mesure de 2,2 mm à 2,5 mm.

6. Pont de fixation en bande droite, selon les revendications 1 à 5, **caractérisé en ce que** l'inertie mesurée dans la zone centrale de la partie supérieure (4) du pont (2) n'est pas inférieure à 1,7 mm⁴.
